(19) **Europäisches Patentamt European Patent Office Office européen des brevets**

(11) **EP 3 412 361 A1**

(12) **EUROPEAN PATENT APPLICATION**
published in accordance with Art. 153(4) EPC

(43) Date of publication:
**12.12.2018 Bulletin 2018/50**

(51) Int Cl.:
*B01J 20/10* [(2006.01)]  *B01J 20/30* [(2006.01)]
*B01J 20/22* [(2006.01)]  *C02F 1/28* [(2006.01)]
*G21F 9/12* [(2006.01)]

(21) Application number: **16881143.8**

(22) Date of filing: **26.12.2016**

(86) International application number:
**PCT/CN2016/112082**

(87) International publication number:
**WO 2017/114354 (06.07.2017 Gazette 2017/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.12.2015  CN 201511021523
04.07.2016  CN 201610518400**

(71) Applicant: **Tsinghua University
Beijing 100084 (CN)**

(72) Inventors:
• **ZHAO, Xuan
Beijing 100084 (CN)**
• **WEI, Jiying
Beijing 100084 (CN)**
• **CHENG, Xuzhou
Beijing 100084 (CN)**

(74) Representative: **Boult Wade Tennant LLP
Verulam Gardens
70 Gray's Inn Road
London WC1X 8BT (GB)**

(54) **METHOD FOR PREPARING PARTICULATE FORM CAESIUM-REMOVAL INORGANIC ION ADSORBENT AND PRODUCT AND APPLICATION THEREOF**

(57) The present invention relates to a process for preparation of particulate cesium scavenging inorganic ion adsorbent as well as its product and application. In particular, based on the monolayer dispersion principle of salts on a oxides carrier, the monolayer dispersion threshold of different kinds of metal ion $M^{n+}$ salts on the surface of silica gel is determined by X - ray diffraction, to obtain the optimum $M^{n+}$ ion salt loading. Upon preparing the adsorbent, silica gel pellets are impregnated with a concentrated metal ion $M^{n+}$ salt solution, to load the $M^{n+}$ ion on the surface of silica gel to form a dispersion monolayer and to form a stronger binding between the $M^{n+}$ ion and the silica gel; after that the obtained intermediate $M/SiO_2$ is impregnated with ferrocyanide solution so that ferrocyanide reacts with $M^{n+}$ ion on the surface to produce M ion stabilized ferrocyanide with a stronger binder to the $SiO_2$ surface. It has been demonstrated by the static $Cs^+$ adsorption performance, a fixed bed reactor non-radioactive experiment on a fixed bed reactor and $^{137}Cs$ radioactive tracer experiment on a fixed bed reactor that the silica gel supported ferrocyanide adsorbent as prepared by this method exhibits a good adsorption performance to $Cs^+$.

FIG.3

**Description**

TECHNICAL FIELD

The present invention relates to a particulate inorganic ion adsorbent for removing $^{134}Cs$ / $^{137}Cs$ ions in radioactive waste treatment and its industrial preparation process, especially to a preparation process for a composite adsorbent material. The adsorbent is supported by silica gel as a carrier, which surface is covered by a series of metal ion stabilized ferrocyanide active components through surface monolayer dispersion technique in which the stable metal ion comprises $Fe^{3+}$, $Co^{2+}$, $Cu^{2+}$, $Zn^{2+}$ and $Zr^{4+}$, and so on. The resulting particulate adsorbent is suitable for filling into a fixed bed adsorption reactor for waste treatment processes at nuclear power plants and other nuclear facilities. The present invention belongs to the technical field of material preparation and radioactive waste water treatment.

BACKGROUND

Nuclear power, as an important clean energy, is gradually becoming an important part of China's energy structure. After Japan's Fukushima nuclear accident, nuclear safety has become an important issue that needs to be concerned in the nuclear energy development, and thus the establishment of nuclear power plant emergency response mechanism and development of emergency technology research are very important and urgent. The important issue to be concerned in the nuclear power plant accident is whether radioactive waste can be fast treated efficiently and timely. In this regard, the Japan's Fukushima nuclear accident would be a serious warning, and under nuclear accident conditions, a large number of radioactive wastes were discharged into the sea, causing pollution.

Low-level waste water is complex, and often contains fission products (I, Cs, Sr, Te, Rb, Mo, Ag and rare earth elements), structural materials activated product (Cr, Mn, Fe, Co, Ni), and radioactive Actinides (U, Pu, Am, Cm, etc.). The fission products $^{134}Cs$ / $^{137}Cs$ are the main radionuclides released under the nuclear accident, and are considered as indicators for monitoring nuclear fuel damage. In the Fukushima nuclear accident, cesium is the main source of radiation from the large amount of radioactive waste leaking from the reactor (Hi ikata et al., 2014; Tsukada et al., 2014). Studies have shown that radioactive cesium contaminants may remain in biological systems for many years (Avery, 1996). Due to the high content, long half-life, high solubility and biocompatibility, $^{134}Cs$ / $^{137}Cs$ are the main targets to be removed from the low-level waste water.

At the nuclear power plant accident emergency conditions, low-level waste water treatment technology must meet the requirements of rate, efficiency and reliability. Fukushima accident treatment is an optimization and evaluation in practice to radioactive waste treatment technology at nuclear emergency conditions via the power of many countries in the world, and the final formed effective treatment process includes the following technical phase: first, pre-filtration and oil-water separation technology to remove the main solid residues in the waste water and diesel or other organic matters remained in water; followed by inorganic ion adsorption technology, the focus of which is to use selective inorganic adsorbent to remove $^{134}Cs$ / $^{137}Cs$ and $^{129}I$ / $^{131}I$ and to render them aggregate to the surface of the solid adsorbent, thereby effectively reducing the radioactive activity level in the waste water; followed by the membrane polishing unit, in which a variety of nuclides and other non-radioactive metal ions are concentrated and separated, so that radioactive activities in the discharged water are further reduced and meet the requirements of emissions. In this set of nuclear accident emergency process, cesium scavenging adsorbent played an important role.

Nuclear power plant in the normal operation usually adopts an "ion exchange + evaporation concentration" process for radioactive waste treatment, in which organic ion exchange resin is a conventional application material. In principle, the metal ions in the waste liquid have the possibility of exchanging cations or anions on the resin, so the organic resin has a broad spectrum of treatment effects, and its selectivity to nuclide ions is low. Due to the high salinity and low radionuclide concentration of low-level waste liquid, the amount of resin required to achieve higher nuclide removal rates is large, which will eventually form a large amount of solid radioactive waste. Compared with the organic resin material, inorganic ion adsorbents have a good thermal stability and a chemical stability, a strong radiation resistance, a high stability in long-term geological storage after being saturated, easy on-site radiation protection and waste terminal treatment and disposal. More importantly, the inorganic ion adsorbents are highly selective to major nuclides such as $^{134}Cs$ / $^{137}Cs$, $^{90}Sr$ and $^{60}Co$, which are suitable for the treatment of high-salt, strongly acidic / alkaline low-level waste liquid, and are capable of reducing the radioactive activity of waste liquid, reducing the amount of solid waste, to meet the requirement of reduction of nuclear waste. In addition, the inorganic ion adsorbents can be easily put into a mobile small-scale purification equipment, especially suitable for nuclear emergency response to different forms of decentralized pollution sources.

In the past few decades, there have been many studies on the removal of cesium ion from solutions using inorganic adsorbents and various types of adsorbents are used in which ferrocyanide adsorbents may maintain good adsorption effect to cesium ion in a wide pH range. For example, the University of Helsinki developed a ferrocyanide adsorbent Cs-treat and the absorbent may handle about 10 tons of low-level waste liquid (salt content of 240g/L) from a certain nuclear power plant per kilogram of the material, and achieve a decontamination coefficient to Cs of 2000, which is 2 times of the traditional evaporation - ion exchange method and it's the best research result in the world in terms of Cs removal.

Stable ferrocynanide with metal ion such as Ti, Co, Cu, Zn, Ni or Zr and the like may highly efficient adsorb $Cs^+$ from a high salinity low-level waste liquid having a pH = 1 ~ 13 range, achieving a $Cs^+$ distribution coefficient of $10^4$ ~ $10^6$ and a selectivity coefficient $K_{Cs/Na}$ to Cs of up to 1500000 in the presence of $Na^+$ (Nuclear Science and Engineering, 137, 206-214, 2001). However, in practical applications, ferrocyanide is generally small in particle size, has poor hydraulic properties, cannot be handled on the column, and is very difficult to carry out solid-liquid phase separation. In addition, ferrocyanide particles have poor internal mass transfer conditions, and thus the inner adsorbents are often not fully utilized (Nuclear and Radiochemistry, 23, 108-113, 2001). In view of this problem, domestic and foreign counterparts usually use immobilization technologies, one is to load ferrocyanide to the surface of carrier such as silica (Separation and Purification Technology 16, 147-158, 1999), the drawback of which is: a low loading of active components and the process to fix ferrocyanide through transition metal ions is difficult to carry out and the active ferrocyanide components is easy to lose during use. And the other immobilization technology is to combine the adsorbent with PAN to form an inorganic / organic hybrid ball (Chinese patent CN1319849A), whose problem is that the binder is easy to clog the channel of the surface of the adsorbent and reduce the adsorbent performance.

In this study, two kinds of technical routes were adopted for the immobilization of cesium adsorbents, which effectively avoided the problem of excessive water resistance caused by the use of ferrocyanide particles. The first one is to prepare a hybrid material of potassium cobalt ferrocyanide and porous silica by silica sol in situ immobilization technology, which has a $Cs^+$ adsorption capacity of 0.335 meq Cs/g adsorbent (Chinese Patent CN 200710064453.0). The second one is to obtain a hybrid material of spherical titanium potassium ferrocyanide and silica gel pellets by firstly forming a surface coated composite carrier with $TiO_2$ through the reaction of the formed silica gel pellets with tetrabutyl titanate and then immersing the carrier with a hydrochloric acid solution of potassium ferrocyanide (Chinese Patent 200710122085.0). In in-situ immobilization technology, $SiO_2$ as a binder is easy to wrap active adsorbent ferrocyanide in the inner layer and thus the adsorbent is not easy to play its adsorption function. The adsorbent coated on the outer surface of silica gel can easily contact $Cs^+$, but its adsorption efficiency and capacity are negatively affected because of larger particle size of the silica gel pellets (3-4 mm).

From the prospective of practice, it is desirable to realize the immobilization of the adsorbent by introducing the adsorbent on the surface of formed silica gel pellets. However, as described above, the adsorbent prepared by this method has a problem that the surface active component is easy to lose in use and the adsorption efficiency and adsorption capacity are limited. In order to prepare a silica gel-supported adsorbent having a high adsorption efficiency and an adsorption capacity, it is common to introduce a large amount of metal salts on the surface of silica gel pellets so that as may adsorbed active components can be supported by the silica gel pellets via surface reaction as possible. However, excessive metal salts buildup would cause the active ingredient on the surface of carrier to be easily lost in use, thereby reducing the service life of the adsorbent and causing secondary contamination problems. Thus, in practice, it is a challenging task to reduce or even eliminate the loss of the active components on the surface of the carrier in use in the preparation of silica gel-supported adsorbents with desirable adsorption efficiency and adsorption capacity.

SUMMARY

On the basis of the preliminary work, the inventors selected a macropore silica gel with small particle size as the carrier, and loaded a monolayer of ferrocyanide on the surface of silica gel by a monolayer dispersion principle, to prepare a transition metal ion $M^{n+}$ stabilized particulate ferrocyanide adsorbent in which $M^{n+}$ = $Fe^{3+}$, $Co^{2+}$, $Cu^{2+}$, $Zn^{2+}$, $Zr^{4+}$ and so on.

The present invention develops a particulate ferrocyanide adsorbent stabilized by a transition metal ion $M^{n+}$ and provides an industrial process for the preparation of a supported ferrocyanide composite adsorbent material comprising the following specific steps:

(1) Determining monolayer dispersion threshold of $M^{n+}$ salt on the surface of silica gel

Through equal volume impregnation method, silica gel pellets is impregnated with a series of different concentrations of salt solution containing $M^{n+}$ ion. The impregnated solid materials are dried in an oven to obtain a silica gel intermediate $M/SiO_2$ with a different amounts of M salt on the surface. Based on monolayer dispersion principle of a metal salt on the surface of carrier, the monolayer dispersion threshold of various kinds of $M^{n+}$ ion salts on silica gel surface is determined by X - ray diffraction method. The value is the monolayer loading of various salts on the surface of silica gel carrier.

(2) Loading a monolayer of $M^{n+}$ ion salt on the silica gel surface

Silica gel is packed in stainless steel trays in a blast drying equipment and each tray has the same amount of silica gel. $M^{n+}$ ion salt is dissolved in a dissolved tank with heating and stirring so that the solute is completely dissolved to form a certain concentration of solution A. A certain volume of solution A is added to each tray to immerse all silica gel pellets, and then the trays are placed with shaking for 20-30min followed by sending it into the drying room after standing for 4-5 hours, thereby obtaining a batch of silica gel intermediate $M/SiO_2$.

(3) Preparing ferrocyanide adsorbents by surface reaction

Potassium ferrocyanide is dissolved in a dissolving tank to form a homogeneous solution B. A volume of solution B is added to each tray and immerse all silica gel intermediate $M/SiO_2$, shaking for 20-30min followed by sending it into a blast drying room for baking dry after standing for 4-5 hours, thereby obtaining a batch of silica gel-supported ferrocyanides adsorbent $K_2M[Fe(CN)_6]/SiO_2$.

(4) Washing adsorbents

The adsorbent as obtained in step 3) is sieved to choose those having complete silica gel pellets followed by washing them with tap water to remove soluble substances and any fine powders adhered to the surface of the pellets until the cleaning water becomes clear. The adsorbent after washing is once again dried to obtain a silica gel supported ferrocyanide adsorbent $K_2M[Fe(CN)_6]/SiO_2$ that may be used directly.

The inventors of the present invention have surprisingly found that such silica gel-supported metal ion-stabilized ferrocyanide adsorbent may be prepared by the process of the present invention, which has a desired initial adsorption efficiency and adsorption capacity while being stable for a long time with greatly reduced loss of the active components. In particular, the present invention provides a silica gel-supported metal ion-stabilized ferrocyanides adsorbent characterized in that as a carrier the silica gel has a specific surface area of 900-1200 $m^2/g$; and the metal ion-stabilized ferrocyanide is supported on the silica gel in a monolayer. Preferably, the silica gel has a pore size of 10-15 nm and a particle size of 0.4-2 mm. Preferably, the metal ion is selected from the group consisting of $Fe^{3+}$, $Co^{2+}$, $Cu^{2+}$, $Zn^{2+}$ and $Zr^{4+}$, which metal ion may be derived from, for example, any one of the following metal ion salts: $FeCl_3$, $Fe(NO_3)_3$, $Co(NO_3)_2$, $CoCl_2$, $Cu(NO_3)_2$, $CuSO_4$, $Zn(NO_3)_2$, $ZnCl_2$, $Zn(AC)_2$, $ZrOCl_2$ and $ZrO(NO_3)_2$. Preferably, the ferrocyanide is selected from the group consisting of sodium ferrocyanide, potassium ferrocyanide, or a combination thereof, more preferably potassium ferrocyanide.

Further, in the steps (1) to (4), a macroporous silica gel is selected as a carrier having an average pore diameter of 10 to 15 nm, a specific surface area of 900 to 1200 $m^2/g$, and a silica gel particle size of 0.4 to 2 mm.

Further, in the steps (1) to (2), $M^{n+}$ = $Fe^{3+}$, $Co^{2+}$, $Cu^{2+}$, $Zn^{2+}$ or $Zr^{4+}$ and the like and the selected salts are $FeCl_3$ or $Fe(NO_3)_3$ for $Fe^{3+}$; $Co(NO_3)_2$ or $CoCl_2$ for $Co^{2+}$; $Cu(NO_3)_2$ or $CuSO_4$ for $Cu^{2+}$; $Zn(NO_3)_2$, $ZnCl_2$ or $Zn(AC)_2$ for $Zn^{2+}$ and $ZrOCl_2$ or $ZrO(NO_3)_2$ for $Zr^{4+}$, respectively.

Further, in the step (1), it is necessary to determine monolayer dispersion threshold of $M^{n+}$ ion salt on the surface of silica gel, which may be measured by loading a series of different amounts of the $M^{n+}$ ion salt onto the surface of silica gel by the solution impregnation method followed by drying to obtain the sample to be tested.

The silica gel mass is 5-10 g, and the loading amount of $M^{n+}$ ion salt on the silica gel is 0.02g, 0.05g, 0.1g, 0.5g, 1.0g, 2.0g, 3.0g, 4.0g, 5.0g, 6.0 g per g silica gel; the ratio by volume of the $M^{n+}$ ion solution to the silica gel is 0.5-2.

The obtained samples series is subjected to X-ray diffraction (XRD) and the strongest diffraction peak intensity (y-axis) is linearly correlated with the corresponding $M^{n+}$ ion salt loading (x-axis) in which the intercept on the x-axis is the monolayer dispersion threshold.

Further, in the step (1), the impregnation process is carried out in a water bath at a temperature of 90 °C, and the mixture is continuously stirred until the liquid is completely evaporated and the solute $M^{n+}$ ion salt is fully supported on the silica gel surface.

Further, in the step (1), the silica gel intermediate M/ $SiO_2$ is dried in an oven for 10 h at a temperature of 120 °C.

Further, monolayer dispersion threshold of various $M^{n+}$ ion salts on silica gel is measured by the X-ray diffraction method as described in step (1). According to the present invention, the monolayer dispersion threshold of $Co(NO_3)_2$ on the silica gel is 0.4-0.7 g/g, the monolayer dispersion threshold of $CuSO_4$ is 0.6-0.9 g/g, the monolayer dispersion threshold of $Zn(AC)_2$ is 0.1-0.4 g/g; the monolayer dispersion threshold of $ZrO(NO_3)_2$ is 0.9-1.2 g/g; the monolayer dispersion threshold of $FeCl_3$ is 0.3-0.5 g/g. In embodiments of the present invention, the monolayer dispersion threshold of the $M^{n+}$ ion salt on the silica gel is, for example, 0.18 g/g for $Zn(AC)_2$; 0.63 g/g for $Co(NO_3)_2$; 0.79 g/g for $CuSO_4$; 1.02 g/g for $ZrO(NO_3)_2$; or 0.43 g/g for $FeCl_3$. Further, in the step (2), 1-2 kg of silica gel pellets are added to each tray, and the ratio by volume of the impregnating solution to the silica gel pellets is 1 to 4, and the corresponding solute mass is obtained according to the monolayer dispersion threshold of the $M^{n+}$ ion salt. Thus, the corresponding solution A concentration may be calculated. The dissolution is carried out at a temperature of 30-60 °C.

Further, in the step (3), the molar ratio of potassium ferrocyanide to the $M^{n+}$ ion salt is 0.5 to 1.5, the ratio by volume of the impregnating solution and the intermediate $M/SiO_2$ pellets is 1 to 4, and the dissolution is carried out at a temperature of 30-60°C. According to a preferred embodiment of the present invention, potassium ferrocyanide is used as ferrocyanide to provide an adsorbed active component. However, it will be appreciated by those skilled in the art that other ferrocyanides, such as sodium ferrocyanide, which are readily available in industry, are also suitable for use in the present invention because of its similar chemical properties to potassium ferrocyanide.

Further, in the steps (2) and (3), the solution impregnation is carried out for 3-5 hours followed by drying in an oven at 120 °C for 5-10 hours.

The resulting adsorbent containing ferrocyanide $K_2M[Fe(CN)_6]$ prepared by the above-mentioned preparation process is also within the scope of the present invention.

The inventors of the present invention have surprisingly found that the silica gel-supported metal ion-stabilized ferrocyanide adsorbent according to the present invention has the characteristics of a stable structure and a high adsorption performance. This kind of adsorbent may adsorb the radioactive isotope Cs ion, but also may adsorb the stable isotope Cs ions, so it has broad application prospects. For example, the adsorbent may achieve the separation and / or removal or extraction of radioisotope Cs ions by adsorption, can also achieve the separation and / or removal or extraction of stable isotope Cs ions by adsorption. Thus, use of the silica gel-supported adsorbent containing ferrocyanide $K_2M[Fe(CN)_6]$ according to the present invention for the adsorption (including removal or separation or extraction) of radioisotope isotope Cs ions and for the adsorption (including removal or separation or extraction) of stable isotope Cs ions is also within the scope of the present invention.

The present invention provides an effective process for the industrial preparation of silica gel-supported ferrocyanide $K_2M[Fe(CN)_6]$ adsorbent, which adsorbent can be applied to the efficient removal of Cs ions in radioactive waste of nuclear power plant, and can also be applied to the removal or extraction or separation of stable isotope Cs. In the invention, the silica gel-supported ferrocyanide $K_2M[Fe(CN)_6]$ adsorbent is prepared by a two-step impregnation method using a $M^{n+}$ ion salt and potassium ferrocyanide as raw materials and macropore silica gel as a carrier. In the process, a $M^{n+}$ ion salt is first dispersed on the surface of a silica gel to form a dense monolayer, and the dispersion threshold of the $M^{n+}$ ion salt is obtained by the method described in the present invention, that is, the optimum loading of the $M^{n+}$ ion salt; and then $K_2M(Fe(CN)6]$ is deposited on the surface of silica gel to obtain a cesium scavenging adsorbent with a stable structure and a high adsorption performance.

DRAWINGS DESCRIPTION

Figure 1 shows photographs of the five silica gel-supported ferrocyanide adsorbents obtained in Example 1;

Figure 2 shows an XRD pattern of the five silica-supported ferrocyanide adsorbents obtained in Example 1;

Figure 3 shows an FT-IR plot of the five silica gel supported ferrocyanide adsorbents obtained in Example 1;

Figure 4 (a-e) shows SEM images of the five silica-supported ferrocyanide adsorbents obtained in Example 1;

Figure 5 is an equilibrium adsorption isotherm to $Cs^+$ ions of the five silica-supported ferrocyanide adsorbents obtained in Example 1;

Figure 6 is a fixed bed packed column penetration curve to $Cs^+$ ions of adsorbents KZnHCF-S and KCuHCF-S obtained in Example 1;

Figure 7 shows the relationship between the decontamination coefficient and the water treatment capacity of the fixed bed $Cs^+$ adsorption cold test with the adsorbent KZnHCF-S obtained in Example 3;

Table 1 shows the results of the specific surface area measurement and the static $Cs^+$ adsorption capacity of the five silica-supported ferrocyanide adsorbents obtained in Example 1.

DETAILED DESCRIPTION

The present invention will be further described with reference to specific embodiments thereof, but the present invention is not limited to the following examples. Unless otherwise specified, the processes are the conventional methods, and the raw materials and the standard chemical reagents used for the detection are obtained from a commercially available route.

In the examples as described, the experiment using a stable isotope Cs, was known as "a cold experiment" in which the performance of the adsorbent was determined by a static adsorption and a dynamic adsorption of the fixed bed reactor, respectively and the concentration of $Cs^+$ ions before and after adsorption was determined by Plasma mass spectrometry (ICP-MS). The experiment using radioisotope $^{137}Cs$ was called isotope tracer experiments, also known as thermal experiments in which the adsorbent was loaded in a fixed bed reactor to determine its dynamic adsorption properties and the radioactivity of tracer $^{137}Cs$ before and after adsorption was determined by $\gamma$ Spectrum Analysis.

In the static adsorption assay, an amount of adsorbent was added to a 50 mL centrifuge tube and placed on a constant temperature shaker for 48 h-72 h. The $Cs^+$ ion concentration before and after adsorption was measured. The adsorbent performance was expressed by partition coefficient $K_d$ and decontamination coefficient DF. The adsorption partition coefficient $K_d$ (mL/g) is expressed by the following formula (1), where $C_0$ and $C_t$ are the initial concentration of the adsorbed ions and the concentration of the adsorbed ions after reaching adsorption equilibrium, F is the ratio of the volume of the solution to be treated (mL) to the mass of the adsorbent (mg). The decontamination coefficient is shown in the following formula (2), which is the ratio of the initial concentration of the adsorbed ions to the concentration of the adsorbed ions after reaching adsorption equilibrium. Generally, the adsorption coefficient is related to the characteristics of the material itself and $K_d$ value of more than $10^5$ shows better characteristics of the adsorbent. The decontamination coefficient is not only related to the adsorption characteristics of the adsorbent itself, but also to the amount of the adsorbent. Greater decontamination coefficient shows the removal of contaminants completely.

$$Kd = (C_o - C_t) \times F \times 1000 / C_t \ (1)$$

$$DF = C_o / C_t \ (2)$$

In the dynamic adsorption performance of fixed bed reactor, the adsorbent was packed in the first or second stage adsorption column and the solution containing $Cs^+$ flows through the fixed bed at a fixed flow rate for the determination of the mass concentration of $Cs^+$ in the effluent (cold test) or radioactivity (thermal test) in which the flow rate was set to 8 bed volumes per hour, i.e. 8 BV/h, and the performance of the adsorption reactor is expressed by the decontamination factor DF as shown in Formula 2.

Comparative Example 1

To 8 small beakers, 0.1 g, 0.5 g, 1.0 g, 2.0 g, 3.0 g, 4.0 g, 5.0 g, and 6.0 g of cobalt nitrate $Co(NO_3)_2 \cdot 6H_2O$ was added followed by 20 mL of water to completely dissolve it, respectively. Then, 1 g of silica gel pellets were added to each beaker and the beaker was placed in a water bath at a temperature of 90 °C. In the process of evaporation of water, the mixture was being stirred with a glass rod until the water evaporated and the pellets were basically dry. The beaker was dried in an oven at 120 °C for 10 hours. Then, 1 g of pink silica gel pellets loaded with cobalt nitrate was mixed with 0.2 g of sodium chloride (NaCl) by grinding followed by measuring its diffraction peak through XRD. The monolayer dispersion threshold of cobalt nitrate on silica gel was measured by XRD diffraction peak intensity extrapolation in which the measured value was 0.63 g/g.

Comparative Example 2

To 8 small beakers, 0.1 g, 0.5 g, 1.0 g, 2.0 g, 3.0 g, 4.0 g, 5.0 g, and 6.0 g of copper sulfate ($CuSO_4 \cdot 5H_2O$) was added followed by 20 mL of water to completely dissolve it, respectively. Then, 1 g of silica gel pellets were added to each beaker and the beaker was placed in a water bath at a temperature of 90 **°**C. In the process of evaporation of water, the mixture was being stirred with a glass rod until the water evaporated and the pellets were basically dry. The beaker was dried in an oven at 120 °C for 10 hours. Then, 1 g of blue silica gel pellets loaded with copper sulfate was mixed with 0.2 g of sodium chloride (NaCl) by grinding followed by measuring its diffraction peak through XRD. The monolayer dispersion threshold of cobalt nitrate on silica gel was measured by XRD diffraction peak intensity extrapolation in which the measured value was 0.79 g/g.

Comparative Example 3

To 8 small beakers, 0.1 g, 0.5 g, 1.0 g, 2.0 g, 3.0 g, 4.0 g, 5.0 g, and 6.0 g of zinc acetate (($CH_3COO)_2Zn \cdot$

$2H_2O$) was added followed by 20 mL of water to completely dissolve it, respectively. Then, 1 g of silica gel pellets were added to each beaker and the beaker was placed in a water bath at a temperature of 90 °C. In the process of evaporation of water, the mixture was being stirred with a glass rod until the water evaporated and the pellets were basically dry. The beaker was dried in an oven at 120 °C for 10 hours. Then, 1 g of white silica gel pellets loaded with zinc acetate was mixed with 0.2 g of sodium chloride (NaCl) by grinding followed by measuring its diffraction peak through XRD. The monolayer dispersion threshold of cobalt nitrate on silica gel was measured by XRD diffraction peak intensity extrapolation in which the measured value was 0.18 g/g.

Comparative Example 4

To 8 small beakers, 0.1 g, 0.5 g, 1.0 g, 2.0 g, 3.0 g, 4.0 g, 5.0 g, and 6.0 g of $ZrO (NO_3)_2$ was added followed by 20 mL of water to completely dissolve it, respectively. Then, 1 g of silica gel pellets were added to each beaker and the beaker was placed in a water bath at a temperature of 90 °C. In the process of evaporation of water, the mixture was being stirred with a glass rod until the water evaporated and the pellets were basically dry. The beaker was dried in an oven at 120 °C for 10 hours. Then, 1 g of white silica gel pellets loaded with $ZrO (NO_3)_2$ was mixed with 0.2 g of sodium chloride (NaCl) by grinding followed by measuring its diffraction peak through XRD. The monolayer dispersion threshold of cobalt nitrate on silica gel was measured by XRD diffraction peak intensity extrapolation in which the measured value was 0.79 g/g.

Comparative Example 5

To 8 small beakers, 0.1 g, 0.5 g, 1.0 g, 2.0 g, 3.0 g, 4.0 g, 5.0 g, and 6.0 g of ferric chloride ($FeCl_3 \cdot 6H_2O$) was added followed by 20 mL of water to completely dissolve it, respectively. Then, 1 g of silica gel pellets were added to each beaker and the beaker was placed in a water bath at a temperature of 90 °C. In the process of evaporation of water, the mixture was being stirred with a glass rod until the water evaporated and the pellets were basically dry. The beaker was dried in an oven at 120 °C for 10 hours. Then, 1 g of yellow silica gel pellets loaded with ferric chloride was mixed with 0.2 g of sodium chloride (NaCl) by grinding followed by measuring its diffraction peak through XRD. The monolayer dispersion threshold of cobalt nitrate on silica gel was measured by XRD diffraction peak intensity extrapolation in which the measured value was 0.79 g/g.

Example 1: Laboratory preparation of five silica gel supported adsorbents

Preparation of silica gel-supported adsorbent by two step impregnation method:

1) To 5 beakers with a volume 10L containing 4L water, A-630 g of $Co(NO_3)_2 \cdot 6H_2O$; B-790g of $CuSO_4 \cdot 5H_2O$; C-180g of $(CH_3COO)_2Zn \cdot 2H_2O$; D-1020 g of $ZrO (NO_3)_2$; and E-430g of $FeCl_3 \cdot 6H_2O$ were added respectively followed by heating and stirring to completely dissolve. And then, five solutions were poured into five trays each of which was filled with 1kg of silica gel particles, and the solution basically immersed all the silica gel, standing for 3h, during which the mixture was stirred frequently to impregnate the pellets evenly. Then five trays were placed in a constant temperature oven, dried at 120 °C for 10h, and then removed to cool, to obtain silica gel intermediates with ion.

2) To each of the five 10L beakers of A, B, C, D, and E, 5L of deionized water was added followed by adding a certain amount of potassium ferrocyanide. The resulting mixture was heated to 60-80 °C to completely dissolve it. The molar ratio of potassium ferrocyanide added to each beaker to the corresponding Co (A), Cu (B), Zn (C), Zr (D), or Fe (E) ion was 1.05. The prepared solution was added to the corresponding tray in the previous step, so that the solution immersed all solid pellets, standing for 3h, during which the mixture was stirred frequently to impregnate the pellets evenly. Then five trays were placed in a constant temperature oven, dried at 120 °C for 10h, then taken out to cool, to obtain five kinds of silica gel-supported ferrocyanide type adsorbents, named KMHCF-S, where M = Co, Cu, Zn, Fe, Zr.

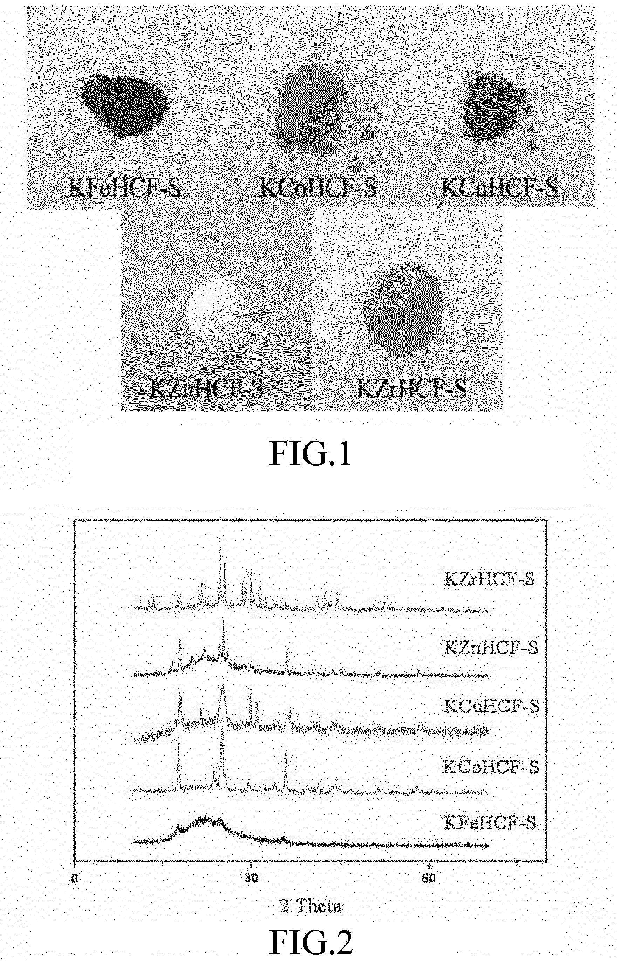

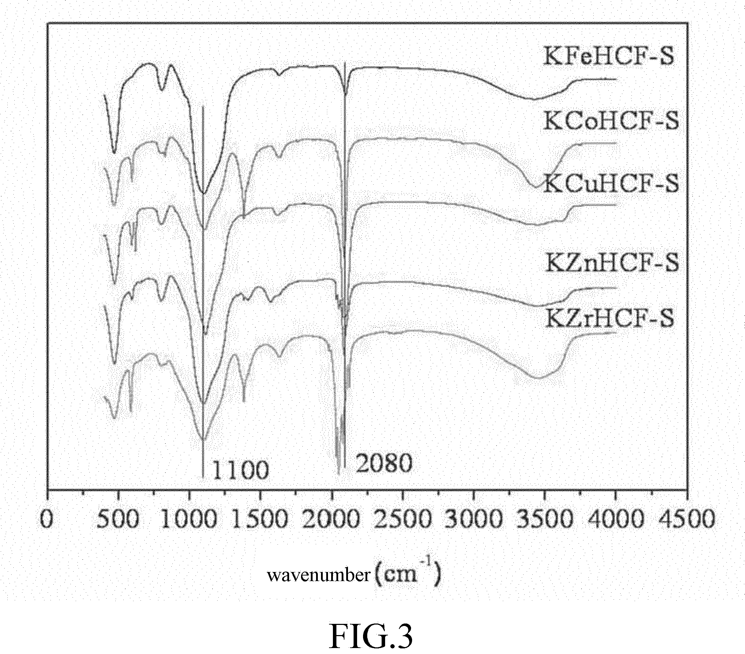

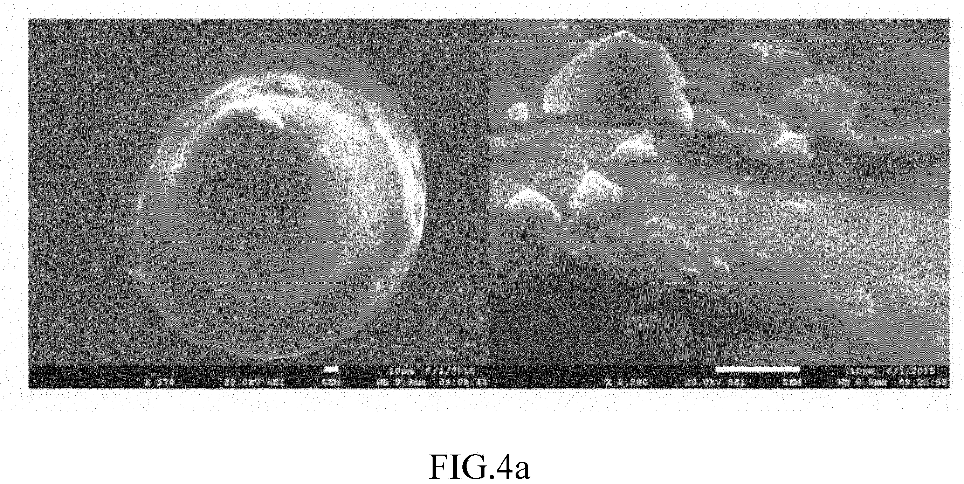

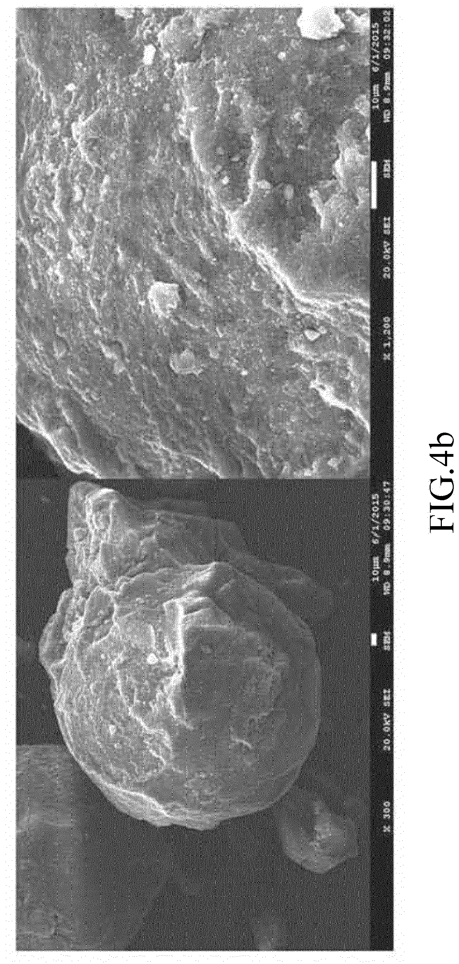

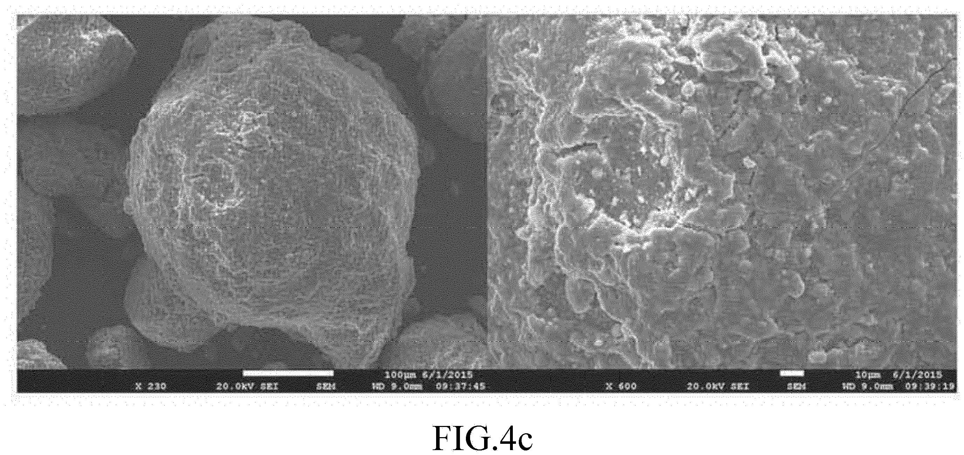

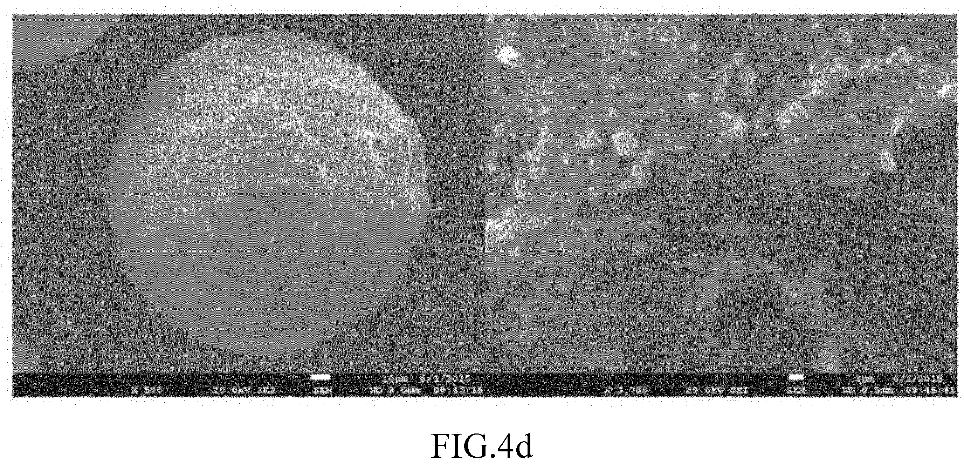

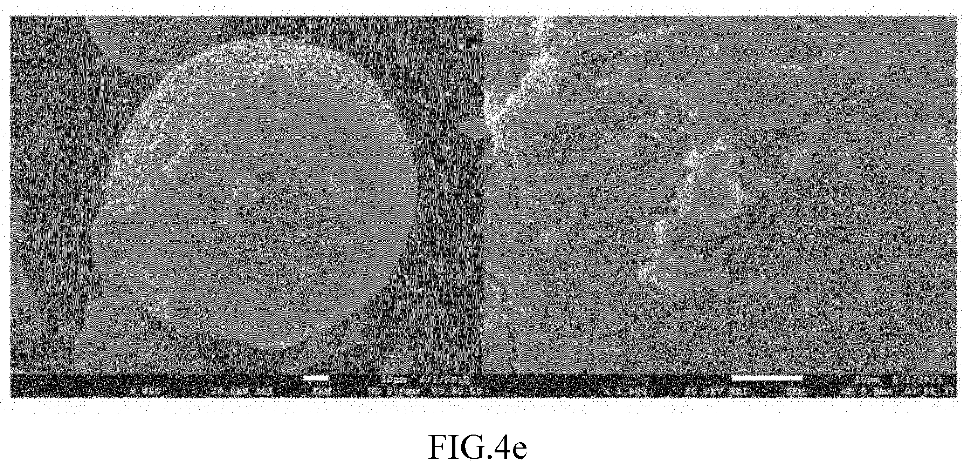

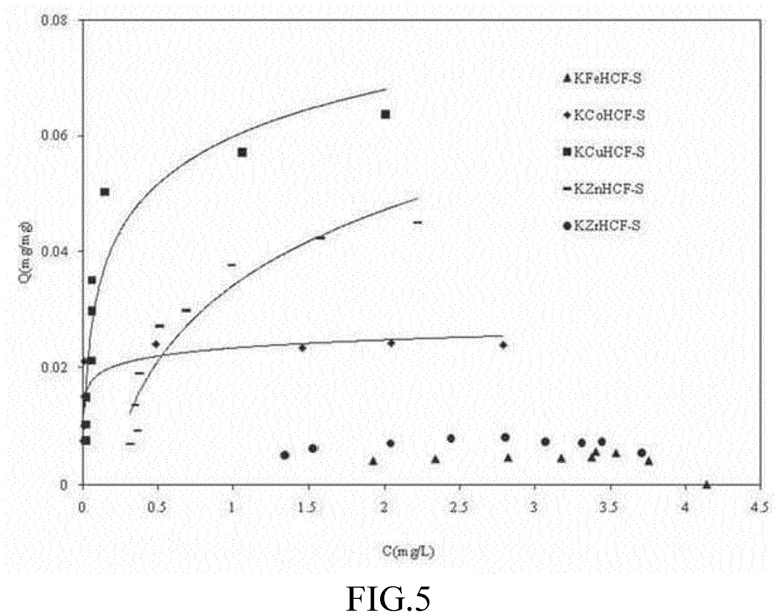

Figure 1 shows appearance of the five adsorbents, Figures 2-3 show the XRD patterns and the Fourier transform infrared (FT-IR) spectra of the five adsorbents, respectively, and Figure 5 shows the Scanning electron micrographs of the five adsorbents. As can be seen from Fig. 1 and Fig. 4, the adsorbents as obtained with different metal ion had different colors. Under scanning electron microscope, all adsorbents were sphere with different surface roughness. From the XRD and FT-IR spectra, there were the characteristic diffraction peaks and characteristic infrared absorption peaks

(2080 cm$^{-1}$) of ferrocyanide which indicated that the metal ion M-stabilized ferrocyanide active component was formed on the silica gel surface. The specific surface area values of the adsorbents as determined by the low temperature nitrogen adsorption method were given in Table 1.

The adsorptive equilibrium isotherms of the five adsorbents to Cs ions were determined by static adsorption method. See Fig. 4. It can be seen that KCoHCF-S, KCuHCF-S and KZnHCF-S have better adsorption properties to Cs, and KZrHCF-S and KFeHCF-S is poor. The adsorption capacity of the material to Cs was obtained by Langmuir fitting. The result is listed in Table 1.

Table 1: Five silica gel supported ferrocyanide adsorbents Specific surface area analysis results

| Sample | Specific Surface Area (m$^2$/g) | Adsorption capacity (mg / mg) |
|---|---|---|
| KFeHCF-S | 137.947 | |
| KCoHCF-S | 66.537 | 0.022 |
| KCuHCF-S | 389.429 | 0.061 |
| KZnHCF-S | 49.627 | 0.059 |
| KZrHCF-S | | 90.728 |

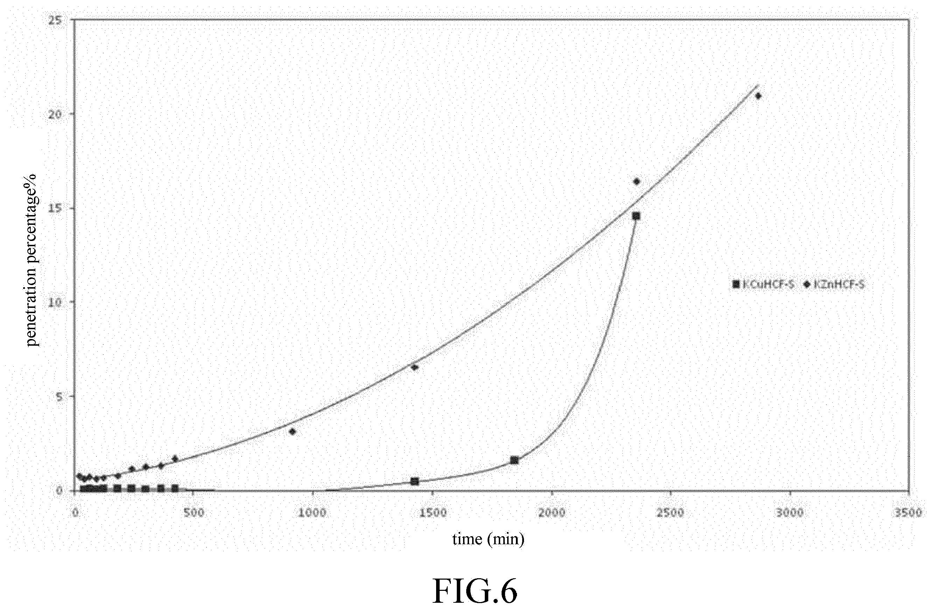

Figure 6 shows the dynamic penetration curves as measured by packing KCuHCF-S and KZnHCF-S in a single-stage fixed bed reactor with an adsorption column diameter of 1.5cm and a filling height of 10cm. The obtained penetration cure is better able to fit Thomas model, fitting that the maximum adsorption capacity of the KCuHCF-S and KZnHCF-S beds was 0.022 mg / mg and 0.023 mg / mg, respectively.

Example 2: Single batch 500 kg of KCuHCF-S trial

To 1 ton of reaction vessel, 500 L of water was added followed by adding 395 kg of $CuSO_4 \cdot 5H_2O$, and the mixture was continuously stirred by heating to 80 °C. After that, 500kg silica gel carrier was added and immersed at 80 °C for 12h, during which the mixture was stirred frequently to impregnate the pellets evenly. Then, the material was filtered, placed in the trays to dry in an electric drying room at 120 °C for 24h. The filtrate was collected and the adsorption content of the first impregnation was measured by volume. The filtrate was reintroduced into the reaction tank and replenished in it so that the volume of the solution was equal to the first water solution volume. The dried material was added to the reaction vessel again and the first impregnation process were repeated until the solution was substantially completely adsorbed. Once again, the material was placed in the trays to dry in an oven at 120 °C for 24 h, thereby obtaining $Cu/SiO_2$ adsorbent intermediate.

To 1 ton of reaction vessel, 500 L of water was added followed by potassium molybdate that was in an equimolar amount of $CuSO_4 \cdot 5H_2O$, and the mixture was heated to 60 °C with continuously stirring to dissolve it completely. After that, the $Cu/SiO_2$ adsorbent intermediate obtained in the previous step was added and impregnate at 60 °C for 12 h, during which the mixture was stirred frequently to impregnate the pellets evenly. Then, the material was filtered and placed in the trays to dry in an electric drying room at 120 °C for 24h. The filtrate was collected and the adsorption water content of the first impregnation was measured by volume. The filtrate was reintroduced into the reaction tank and replenished in it so that the volume of the solution was equal to the first water solution volume. The dried material was added to the reaction vessel again and the first impregnation process was repeated until the solution was substantially completely adsorbed. Once again, the material was placed in the trays to dry in a hot blast oven at 120 °C for 24 h, thereby obtaining the KCuHCF-S adsorbent.

The material was sieved and washed with water until the solution was clear. The wet material was packed in a two-stage series fixed bed adsorption reactor with a column height of 1 m and a diameter of 100 cm. In the assay, the initial concentration of Cs solution was 1.5mg / L and the flow rate was 100L / h (8BV/h). The sampling points were set at the inlet of the adsorbent bed, the primary outlet and the secondary outlet respectively. The samples were filtered with 0.22 $\mu$m microporous filter, and then the decontamination coefficient of the adsorption reactor was measured. The results show that the decontamination factor was still greater than 1000 when the treated water reached 7000 bed volumes.

Example 3: Single batch 500 kg of KZnHCF-S trial

To 1 ton of reaction vessel, 500 L of water was added followed by adding 395 kg of $(CH_3COO)_2Zn \cdot 2H_2O$, and the mixture was continuously stirred by heating to 40 °C. After that, 500kg silica gel carrier was added and immersed at 40 °C for 12h, during which the mixture was stirred frequently to impregnate the pellets evenly. Then, the material was filtered, placed in the trays to dry in an electric drying room at 120 °C for 24h. The filtrate was collected and the adsorbed content of the first impregnation was measured by the reduced volume. The filtrate was reintroduced into the reaction tank and replenished in it so that the volume of the solution was equal to the first solution volume. The dried material was added to the reaction vessel again and the first impregnation process was repeated until the metal ion was substantially completely adsorbed. Once again, the material was placed in the trays to dry in an oven at 120 °C for 24 h, thereby obtaining $Zn/SiO_2$ adsorbent intermediate.

To 1 ton of reaction vessel, 500 L of water was added followed by potassium ferrocyanide that was in an equimolar amount of $(CH_3COO)_2Zn \cdot 2H_2O$, and the mixture was heated to 60 °C with continuous stirring to dissolve it completely. After that, the $Zn/SiO_2$ adsorbent intermediate obtained in the previous step was added and impregnated at 60 °C for 12 h, during which the mixture was stirred frequently to impregnate the pellets evenly. Then, the material was filtered and placed in the trays to dry in an electric drying room at 120 °C for 24h. The filtrate was collected and the adsorption water content of the first impregnation was measured. The filtrate was reintroduced into the reaction tank and replenished in it so that the volume of the solution was equal to the first solution volume. The dried material was added to the reaction vessel again and the first impregnation process was repeated until the active component was completely adsorbed. Once again, the material was placed in the trays to dry in a hot blast oven at 120 °C for 24 h, thereby obtaining the KZnHCF-S adsorbent.

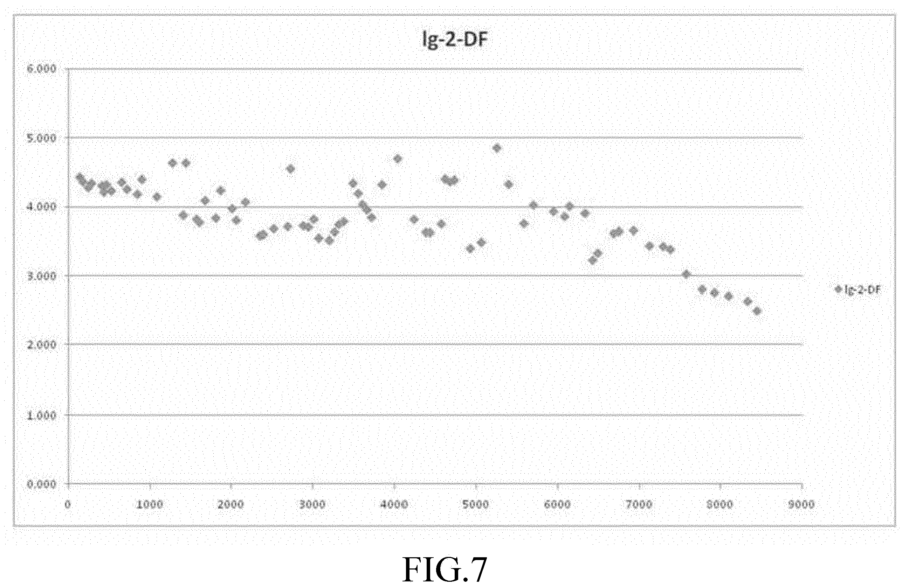

The material was sieved and washed with water until the solution was clear. The wet material was packed in a two-stage series fixed bed adsorption reactor with a column height of 1 m and a diameter of 100 cm. In the assay, the initial concentration of Cs solution was 1.5mg / L and the flow rate was 100L / h (8 BV/h). The sampling points were set at the inlet of the adsorbent bed, the primary outlet and the secondary outlet respectively. The samples were filtered with 0.22 μm microporous filter, and then the decontamination coefficient of the adsorption reactor was measured. Using a fixed bed adsorption experiment, Figure 7 is a curve showing the relationship between the log of the decontamination coefficient and the liquid treatment capacity. It can be seen that the adsorbent had a good removal effect on Cs in which the decontamination coefficient is high, the adsorption capacity is large and the performance is stable for a long time. Under the premise of ensuring the decontamination coefficient of 1000, the ratio of the waste treatment amount to the adsorbent dosage reaches 7000.

Example 4: Stable Industrialization of KZnHCF-S Adsorbent

1-5 kg silica gel was charged with stainless steel trays in a drying room blowing device and $(CH_3COO)_2Zn \cdot 2H_2O$ was dissolved in a dissolving tank by heating and stirring to form a solution with a concentration of 5-15wt%. The solution was added to each tray, and the volume ratio of the solution to the silica gel was 1-4, so that all silica gel pellets were submerged by the solution. The trays were placed in the material vehicle, shaking for 20-30min, and then was sent into the drying room, standing for 4-5 hours, followed by drying at 100-120 °C, to obtain a batch of silica gel intermediate $Zn/SiO_2$.

Potassium ferrocyanide was dissolved in a dissolving tank with heating to form a homogeneous solution. The molar ratio of potassium ferrocyanide to zinc acetate was 0.8-1.2. The solution was added to each tray with a volume ratio of the solution to the silica gel of 1-4, and all the silica gel intermediate $Zn / SiO_2$ was submerged by the solution. The trays were placed in a material vehicle, shaking for 20-30min, and then was sent into a blast drying room, standing for 4-5 hours, followed by drying, thereby obtaining a batch of silica gel supported ferrocyanide type adsorbent KZnHCF-S.

The adsorbents as obtained were sieved to choose those adsorbents with complete silica gel pellets followed by washing them with tap water to remove soluble substances and any fine powders adhered to the surface of the pellets until the cleaning water becomes clear. The adsorbents after washing were once again dried to obtain a silica gel supported ferrocyanide adsorbent KZnHCF-S that may be used directly.

The adsorbent was wet-charged into a two-stage series fixed bed adsorption reactor with the inner diameter of the single fixed bed reactor of 36 cm, and the height of the adsorbent of 80 cm. With the $^{137}$Cs tracking assay, the handling amount was 1.2 t/h, the concentration of the feeding water was 1.7 mg/L the initial activity of $^{137}$Cs was $5.7 \times 10$ Bq / L. The sampling points were set at the inlet of the adsorbent bed, the primary outlet and the secondary outlet respectively. The decontamination coefficients of the adsorption reactor were measured by an γ-ray spectrometer, and the effluent was required to meet the decontamination factor of greater than 1000. The actual decontamination coefficient is $1.2 \times 10^4$.

Example 5: Stable Industrialization of KCuHCF-S Adsorbent

1-5 kg silica gel was charged with stainless steel trays in a drying room and $CuSO_4 \cdot 5H_2O$ was dissolved in a dissolving tank by heating and stirring to form a solution with a concentration of 15-40wt%. The solution was added to each tray, and the volume ratio of the solution to the silica gel was 1-4, so that all silica gel pellets were submerged by the solution. The trays were placed in a material vehicle, shaking for 20-30 min, and then was sent into a drying room, standing for 4-5 hours, followed by drying at 100-120 °C, to obtain a batch of silica gel intermediate $Cu/SiO_2$.

Potassium ferrocyanide was dissolved in a dissolving tank with heating to form a homogeneous solution. The molar ratio of potassium ferrocyanide to copper sulfate was 0.8-1.2. The solution was added to each tray with a volume ratio of the solution to the silica gel of 1-4, and all the silica gel intermediate $Cu/SiO_2$ was submerged by the solution. The trays were placed in a material vehicle, shaking for 20-30min, and then was sent into a drying room, standing for 4-5 hours, followed by drying, thereby obtaining a batch of silica gel supported ferrocyanide type adsorbent KCuHCF-S.

The adsorbents as obtained were sieved to choose those adsorbents with complete silica gel pellets followed by washing them with tap water to remove soluble substances and any fine brownish red powders adhered to the surface of the pellets until the cleaning water becomes clear. The adsorbents after washing were once again dried to obtain a silica gel supported ferrocyanide adsorbent KCuHCF-S that may be used directly.

Example 6: Stable Industrialization of KCoHCF-S Adsorbent

1-5 kg silica gel was charged with stainless steel trays in a drying room blowing device and $Co(NO_3)_2 \cdot 6H_2O$ was dissolved in a dissolving tank by heating and stirring to form a solution with a concentration of 15-30wt%. The solution was added to each tray, and the volume ratio of the solution to the silica gel was 1-4, so that all silica gel pellets were submerged by the solution. The trays were placed in a material vehicle, shaking for 20-30min, and then was sent into a drying room, standing for 4-5 hours, followed by drying at 100-120 °C, to obtain a batch of silica gel intermediate $Co/SiO_2$.

Potassium ferrocyanide was dissolved in a dissolving tank with heating to form a homogeneous solution. The molar ratio of potassium ferrocyanide to zinc acetate was 0.8-1.2. The solution was added to each tray with a volume ratio of the solution to the silica gel of 1-4, and all the silica gel intermediate $Co/SiO_2$ was submerged by the solution. The trays were placed in a material vehicle, shaking for 20-30min, and then was sent into a drying room, standing for 4-5 hours, followed by drying, thereby obtaining a batch of silica gel supported ferrocyanide type adsorbent KCoHCF-S.

The adsorbents as obtained were sieved to choose those adsorbents with complete silica gel pellets followed by washing them with tap water to remove soluble substances and any fine powders adhered to the surface of the pellets until the cleaning water becomes clear. The adsorbents after washing were once again dried to obtain a silica gel supported ferrocyanide adsorbent KCoHCF-S that may be used directly.

While various aspects of the invention have been explained by way of specific embodiments, it will be understood by those skilled in the art that the invention is not limited to the specific embodiments described above, and that any replacement of the particular technical means, raw materials, process steps, etc., and any combinations of various technical means, raw materials, process steps, and the like are within the scope of the present invention.

In order to further illustrate certain aspects of the invention, the invention also provides, in particular, any of the following non-limiting embodiments:

1. A silica gel supported metal ion stabilized ferrocyanide adsorbent characterized in that the specific surface area of the silica gel is in the range of 900-1200 $m^2/g$; and the metal ion stabilized ferrocyanide is supported on the silica gel in a monolayer dispersion form.

2. The adsorbent according to embodiment 1, wherein the silica gel has a pore size of 10-15 nm and a particle size of 0.4-2 mm.

3. The adsorbent according to embodiment 1, wherein the metal ion is selected from the group consisting of $Fe^{3+}$, $Co^{2+}$, $Cu^{2+}$, $Zn^{2+}$ and $Zr^{4+}$.

4. The adsorbent according to embodiment 3, wherein the metal ion is derived from one of the following salt of metal ion of $FeCl_3$, $Fe(NO_3)_3$, $Co(NO_3)_2$, $CoCl_2$, $Cu(NO_3)_2$, $CuSO_4$, $Zn(NO_3)_2$, $ZnCl_2$, $Zn(AC)_2$, $ZrOCl_2$ and $ZrO(NO_3)_2$.

5. The adsorbent according to embodiment 1, wherein the ferrocyanide is selected from the group consisting of sodium ferrocyanide, potassium ferrocyanide, or a combination thereof, preferably potassium ferrocyanide.

6. The adsorbent according to any one of embodiments 4 to 5, characterized in that the metal ion stabilized ferrocyanide supported on the silica gel in a monolayer dispersion form is formed by the following steps:

(i) loading the salt of metal ion onto the surface of silica gel in a monolayer dispersion form; and

(ii) carrying out a surface reaction of the solution of the ferrocyanide with the salt of metal ion supported on the surface of silica gel in a molar ratio of 0.5 to 1.5: 1, to form said metal ion stabilized ferrocyanide supported on the silica gel in a monolayer dispersion form.

7. The adsorbent according to embodiment 6, wherein the molar ratio of the ferrocyanide to the metal ion salt is from 0.8 to 1.2: 1.

8. The adsorbent according to embodiment 6, characterized in that loading the salt of metal ion onto the surface of silica gel in a monolayer dispersion form comprises:

    (a) determining the monolayer dispersion threshold of the salt of metal ion on the surface of silica gel by XRD diffraction peak intensity extrapolation; and (b) loading the salt of metal ion onto the surface of silica gel in a monolayer dispersion form by soaking the silica gel pellets with the solution of salt of metal ion, according to the monolayer dispersion threshold.

9. The adsorbent according to embodiment 8, characterized in that on the silica gel, the monolayer dispersion threshold of $Co(NO_3)_2$ is 0.4-0.7 g/g; the monolayer dispersion threshold of $CuSO_4$ is 0.6-0.9 g/g; $Zn(AC)_2$ is 0.1-0.4 g/g; the monolayer dispersion threshold of $ZrO(NO_3)_2$ is 0.9-1.2 g/g; the monolayer dispersion threshold of $FeCl_3$ is 0.3-0.5 g/g.

10. The adsorbent according to embodiment 1, wherein the adsorbent is an adsorbent for adsorbing radioisotope Cs ions or adsorbing stable isotope Cs ions.

11. A process of preparing a silica gel-supported metal ion-stabilized ferrocyanide adsorbent, the process comprising:

    (i) selecting a silica gel having the specific surface area in the range of 900 to 1200 $m^2$/g as a carrier;

    (ii) loading salt of the metal ion onto the surface of silica gel in a monolayer dispersion form; and

    (iii) carrying out a surface reaction of the solution of ferrocyanide with the salt of the metal ion loaded on the surface of silica gel at a molar ratio of 0.5 to 1.5: 1, to form a metal ion stabilized ferrocyanide on the silica gel.

12. The method of embodiment 11, wherein the silica gel has a pore size of 10-15 nm and a particle size of 0.4-2 mm.

13. The method according to embodiment 3, wherein the salt of metal ion is selected from the group consisting of $FeCl_3$, Fe $(NO_3)_3$, Co $(NO_3)_2$, $CoCl_2$, $Cu(NO_3)_2$, $CuSO_4$, Zn $(NO_3)_2$, $ZnCl_2$, $Zn(AC)_2$, $ZrOCl_2$ and $ZrO(NO_3)_2$.

14. The method of any one of embodiments 11-13, wherein loading the salt of metal ion onto the surface of silica gel in a monolayer dispersion form comprises: (a) determining the monolayer dispersion threshold of the salt of metal ion on the surface of silica gel by XRD diffraction peak intensity extrapolation; and (b) loading the salt of metal ion onto the surface of silica gel in a monolayer dispersion form by soaking the silica gel pellets with the solution of salt of metal ion, according to the monolayer dispersion threshold.

15. The method of embodiment 14, characterized in that on the silica gel, the monolayer dispersion threshold of $Co(NO_3)_2$ is 0.4-0.7 g/g; the monolayer dispersion threshold of $CuSO_4$ is 0.6-0.9 g/g; $Zn(AC)_2$ is 0.1-0.4 g/g; the monolayer dispersion threshold of $ZrO(NO_3)_2$ is 0.9-1.2 g/g; the monolayer dispersion threshold of $FeCl_3$ is 0.3-0.5 g/g.

16. The method of embodiment 11, wherein the adsorbent is an adsorbent for adsorbing radioisotope Cs ions or adsorbing stable isotope Cs ions.

17. The method of embodiment 14, wherein the volume ratio of the solution of the salt of metal ion to the silica gel is from 1 to 4: 1.

18. The method of embodiment 14, wherein the silica gel is impregnated with an aqueous solution of the salt of metal ion for 3-5 hours and dried at 120°C for 5-10 h.

19. The method of embodiment 11, wherein the molar ratio of the ferrocyanide to the salt of the metal ion is from 0.8 to 1.2: 1.

20. The method of embodiment 11, wherein the ferrocyanide is selected from the group consisting of sodium ferrocyanide, potassium ferrocyanide, or a combination thereof.

21. A silica gel supported metal ion stabilized ferrous cyanide adsorbent prepared by the process as claimed in any one of embodiments 11-20.

22. Use of the silica gel-supported ferrocyanide adsorbent as claimed in any of the embodiments 1-10 or in embodiment 21 for adsorbing radioisotope Cs ions or adsorbing stable isotope Cs ions.

23. Use according to embodiment 22, for the removal or separation or extraction of radioisotope Cs ions or for the removal or separation or extraction of stable isotope Cs ions.

**Claims**

1. A process for preparing a particulate cesium scavenging inorganic ion adsorbent, **characterized in that** the process comprises the steps of:

    (i) selecting a macroporous slica gel as a carrier;
    (ii) determining monolayer dispersion threshold of different kinds of metal ion $M^{n+}$ salts on the surface of silica gel by X - ray diffraction, based on a monolayer dispersion principle, to obtain an optimum $M^{n+}$ ion salt loading;
    (iii) impregnating silica gel pellets with the metal ion $M^{n+}$ salt solution followed by drying, to obtain an intermediate $M/SiO_2$; and
    (iv) impregnating the intermediate $M/SiO_2$ with ferrocyanide solution to produce $M^{n+}$ ion stabilized ferrocyanide on the $SiO_2$ surface and then standing for some time, followed by drying, sieving and cleaning, thereby obtaining a silica gel supported ferrocyanide adsorbent.

2. The process according to claim 1, wherein in the step (1), the silica gel has a pore diameter of 10 to 15 nm, a specific surface area of 900 to 1200 $m^2/g$, and a silica gel particle size of 0.4 to 2 mm.

3. The process according to claim 1, wherein in the steps (2) to (3), the metal ion $M^{n+}$ = $Fe^{3+}$, $Co^{2+}$, $Cu^{2+}$, $Zn^{2+}$ or $Zr^{4+}$; and the selected salt is $FeCl_3$ or $Fe(NO_3)_3$ for $Fe^{3+}$; $Co(NO_3)_2$ or $CoCl_2$ for $Co^{2+}$; $Cu(NO_3)_2$ or $CuSO_4$ for $Cu^{2+}$; $Zn(NO_3)_2$, $ZnCl_2$ or $Zn(AC)_2$ for $Zn^{2+}$ and $ZrOCl_2$ or $ZrO(NO_3)_2$ for $Zr^{4+}$, respectively.

4. The process according to claim 1, **characterized in that** the monolayer dispersion threshold of the $M^{n+}$ ion salt on the surface of silica gel is firstly required to be measured by the following steps:

    loading a series of different amounts of the $M^{n+}$ ion salt on the surface of silica gel by solution impregnation followed by drying to obtain a sample to be tested, in which the silica gel mass is 5-10g, and the loading of $M^{n+}$ ion salt on silica gel is 0.02g, 0.05g, 0.1g, 0.5g, 1.0g, 2.0g, 3.0g, 4.0g, 5.0g, 6.0 g per g silica gel; and the ratio by volume of the $M^{n+}$ ion solution to silica gel is 0.5-2; and
    measuring the obtained series of samples with X-ray diffraction to obtain the monolayer dispersion threshold.

5. The method according to claim 3, wherein the monolayer dispersion threshold of different salts on the surface of silica gel as measured in the step (2) is: 0.4-07 g/g for $Co(NO_2)_2$; 0.6-0.9 g/g for $CuSO_4$; 0.1-0.4 g/g for $Zn(AC)_2$; 0.9-1.2 g/g for $ZrO(NO_3)_2$; 0.3-0.5 g/g for $FeCl_3$.

6. The method according to claim 1, wherein in the steps (3) and (4), the ratio by volume of the impregnation solution to the silica gel pellets is 1 to 4, and the dissolution temperature is 30 to 60 °C.

7. The method according to claim 1, wherein in the step (4), the molar ratio of potassium ferrocyanide to $M^{n+}$ ion salt is 0.5 to 1.5.

8. The method according to claim 1, wherein in the steps (3) and (4), the solution impregnation time is 3-5 hours and after impregnation, drying is carried out in a blast oven at 120 °C for 10h.

9. A silica gel supported ferrocyanide adsorbent prepared by the process according to any one of claims 1 to 8.

**10.** The use of a silica gel-supported ferrocyanide adsorbent as claimed in claim 8 for adsorption of radioisotope Cs ions and adsorption of stable isotope Cs ions.

**11.** A silica gel supported metal ion stabilized ferrocyanide adsorbent **characterized in that** the silica gel has a specific surface area in the range of 900-1200 $m^2/g$; and the metal ion stabilized ferrocyanide is supported on the silica gel in a monolayer dispersion form.

**12.** The adsorbent according to claim 11, wherein the silica gel has a pore size of 10-15 nm and a particle size of 0.4-2 mm.

**13.** The adsorbent according to claim 11, wherein the metal ion is selected from the group consisting of $Fe^{3+}$, $Co^{2+}$, $Cu^{2+}$, $Zn^{2+}$ and $Zr^{4+}$.

**14.** The adsorbent according to claim 13, wherein the metal ion is derived from one of the following metal ion salts of $FeCl_3$, $Fe(NO_3)_3$, $Co(NO_3)_2$, $CoCl_2$, $Cu(NO_3)_2$, $CuSO_4$, $Zn(NO_3)_2$, $ZnCl_2$, $Zn(AC)_2$, $ZrOCl_2$ and $ZrO(NO_3)_2$.

**15.** The adsorbent according to claim 11, wherein the ferrocyanide is selected from the group consisting of sodium ferrocyanide, potassium ferrocyanide, or a combination thereof, preferably potassium ferrocyanide.

**16.** The adsorbent according to any one of claims 14 to 15, **characterized in that** the metal ion stabilized ferrocyanide supported on the silica gel in a monolayer dispersion form is formed by the following steps:

(i) loading the metal ion salt onto the surface of silica gel in a monolayer dispersion form; and
(ii) carrying out a surface reaction of the ferrocyanide solution with the metal ion salt supported on the surface of silica gel in a molar ratio of 0.5 to 1.5: 1, to form said metal ion stabilized ferrocyanide supported on the silica gel in a monolayer dispersion form.

**17.** The adsorbent according to claim 16, wherein the molar ratio of ferrocyanide to the metal ion salt is from 0.8 to 1.2: 1.

**18.** The adsorbent according to claim 16, **characterized in that** loading the metal ion salt onto the surface of silica gel in a monolayer dispersion form comprises: (a) determining monolayer dispersion threshold of the metal ion salt on the surface of silica gel by XRD diffraction peak intensity extrapolation; and (b) loading the metal ion salt onto the surface of silica gel in a monolayer dispersion form by soaking the silica gel pellets with solution of metal ion salt, according to the monolayer dispersion threshold.

**19.** The adsorbent according to claim 18, **characterized in that** on the silica gel, the monolayer dispersion threshold of $Co(NO_3)_2$ is 0.4-0.7 g/g; the monolayer dispersion threshold of $CuSO_4$ is 0.6-0.9 g/g; the monolayer dispersion threshold of $Zn(AC)_2$ is 0.1-0.4 g/g; the monolayer dispersion threshold of $ZrO(NO_3)_2$ is 0.9-1.2 g/g; the monolayer dispersion threshold of $FeCl_3$ is 0.3-0.5 g/g.

**20.** The adsorbent according to claim 11, wherein the adsorbent is an adsorbent for adsorbing radioisotope Cs ions or adsorbing stable isotope Cs ions.

**21.** A process of preparing a silica gel-supported metal ion-stabilized ferrocyanide adsorbent, the process comprising:

(i) selecting a silica gel having a specific surface area in the range of 900 to 1200 $m^2/g$ as a carrier;
(ii) loading a metal ion salt onto the surface of silica gel in a monolayer dispersion form; and
(iii) carrying out a surface reaction of solution of ferrocyanide with the metal ion salt loaded on the surface of silica gel at a molar ratio of 0.5 to 1.5: 1, to form a metal ion stabilized ferrocyanide on the silica gel.

**22.** The process of claim 21, wherein the silica gel has a pore size of 10-15 nm and a particle size of 0.4-2 mm.

**23.** The process according to claim 21, wherein the metal ion salt is selected from the group consisting of $FeCl_3$, $Fe(NO_3)_3$, $Co(NO_3)_2$, $CoCl_2$, $Cu(NO_3)_2$, $CuSO_4$, $Zn(NO_3)_2$, $ZnCl_2$, $Zn(AC)_2$, $ZrOCl_2$ and $ZrO(NO_3)_2$.

**24.** The process of any one of claims 21-23, wherein loading the metal ion salt onto the surface of silica gel in a monolayer dispersion form comprises: (a) determining monolayer dispersion threshold of the metal ion salt on the surface of silica gel by XRD diffraction peak intensity extrapolation; and (b) loading the metal ion salt onto the surface of silica gel in a monolayer dispersion form by soaking the silica gel pellets with a solution of metal ion salt, according to the monolayer dispersion threshold.

25. The process of claim 24, **characterized in that** on the silica gel, the monolayer dispersion threshold of $Co(NO_3)_2$ is 0.4-0.7 g/g; the monolayer dispersion threshold of $CuSO_4$ is 0.6-0.9 g/g; the monolayer dispersion threshold of $Zn(AC)_2$ is 0.1-0.4 g/g; the monolayer dispersion threshold of $ZrO(NO_3)_2$ is 0.9-1.2 g/g; the monolayer dispersion threshold of $FeCl_3$ is 0.3-0.5 g/g.

26. The process of claim 21, wherein the adsorbent is an adsorbent for adsorbing radioisotope Cs ions or adsorbing stable isotope Cs ions.

27. The process of claim 24, wherein the volume ratio of solution of metal ion salt to the silica gel is from 1 to 4: 1.

28. The process of claim 24, wherein the silica gel is impregnated with an aqueous solution of metal ion salt for 3-5 hours and dried at 120 °C for 5-10 h.

29. The process of claim 21, wherein the molar ratio of the ferrocyanide to the metal ion salt is from 0.8 to 1.2: 1.

30. The process of claim 21, wherein the ferrocyanide is selected from the group consisting of sodium ferrocyanide, potassium ferrocyanide, or a combination thereof.

31. A silica gel supported metal ion stabilized ferrocyanide adsorbent prepared by the process as claimed in any one of claims 21-30.

32. Use of the silica gel-supported ferrocyanide adsorbent as claimed in any of the claims 11-20 or in claim 31 for adsorbing radioisotope Cs ions or adsorbing stable isotope Cs ions.

33. Use according to claim 32, for removal or separation or extraction of radioisotope Cs ions or for removal or separation or extraction of stable isotope Cs ions.

FIG.1

FIG.2

FIG.3

FIG.4a

FIG.4b

FIG.4c

FIG.4d

FIG.4e

FIG.5

FIG.6

FIG.7

# INTERNATIONAL SEARCH REPORT

International application No.

**PCT/CN2016/112082**

### A. CLASSIFICATION OF SUBJECT MATTER

B01J 20/10 (2006.01) i; B01J 20/30 (2006.01) i; B01J 20/22 (2006.01) i; C02F 1/28 (2006.01) i; G21F 9/12 (2006.01) i

According to International Patent Classification (IPC) or to both national classification and IPC

### B. FIELDS SEARCHED

Minimum documentation searched (classification system followed by classification symbols)

B01J 20/-; C02F 1/-; G21F /9-

Documentation searched other than minimum documentation to the extent that such documents are included in the fields searched

Electronic data base consulted during the international search (name of data base and, where practicable, search terms used)

CNABS, CNKI, EPODOC, WPI, ISI Wed of Knowledge: Fe (CN)6, ferrocyanide?, Cesium, Cs, silica, SiO2, absor+, adsor+, seperat+, silica gel

### C. DOCUMENTS CONSIDERED TO BE RELEVANT

| Category* | Citation of document, with indication, where appropriate, of the relevant passages | Relevant to claim No. |
|---|---|---|
| PX | CN 105597660 A (TSINGHUA UNIVERSITY), 25 May 2016 (25.05.2016), description, paragraphs 9-32 | 1-33 |
| PX | CN 105944658 A (TSINGHUA UNIVERSITY), 21 September 2016 (21.09.2016), description, paragraphs 10-33 | 1-33 |
| A | CN 102836693 A (TSINGHUA UNIVERSITY), 26 December 2012 (26.12.2012), description, paragraphs 7-21 | 1-33 |
| A | CN 102794153 A (TSINGHUA UNIVERSITY), 28 November 2012 (28.11.2012), the whole document | 1-33 |
| A | CN 104981285 A (ALTERNATIVE ENERGIES AND ATOMIC ENERGY COMMISSION et al.), 14 October 2015 (14.10.2015), the whole document | 1-33 |
| A | KR 20140100093 A (UKYK), 14 August 2014 (14.08.2014), the whole document | 1-33 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 March 2017 (21.03.2017) | **12 April 2017 (12.04.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Xian** Telephone No.: (86-10) **62084095** |
|---|---|

Form PCT/ISA/210 (second sheet) (July 2009)

## INTERNATIONAL SEARCH REPORT
### Information on patent family members

International application No.

**PCT/CN2016/112082**

| Patent Documents referred in the Report | Publication Date | Patent Family | Publication Date |
|---|---|---|---|
| CN 105597660 A | 25 May 2016 | CN 105944658 A | 21 September 2016 |
| CN 105944658 A | 21 September 2016 | CN 105597660 A | 25 May 2016 |
| CN 102836693 A | 26 December 2012 | CN 102836693 B | 14 May 2014 |
| | | US 2015231598 A1 | 20 August 2015 |
| | | WO 2014044182 A1 | 27 March 2014 |
| CN 102794153 A | 28 November 2012 | CN 102794153 B | 04 June 2014 |
| CN 104981285 A | 14 October 2015 | FR 2996149 B1 | 31 October 2014 |
| | | EP 2900357 A1 | 05 August 2015 |
| | | CA 2886324 A1 | 03 April 2014 |
| | | FR 2996149 A1 | 04 April 2014 |
| | | US 2015235721 A1 | 20 August 2015 |
| | | RU 2015114994 A | 20 November 2016 |
| | | KR 20150145220 A | 29 December 2015 |
| | | WO 2014049048 A1 | 03 April 2014 |
| | | EP 2900357 B1 | 23 November 2016 |
| | | JP 2015535736 A | 17 December 2015 |
| KR 20140100093 A | 15 September 2014 | KR 20140100093 A | 14 August 2014 |
| | | KR 101440215 B1 | 15 September 2014 |
| KR 20140100093 A | 14 August 2014 | KR 101440215 B1 | 15 September 2014 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1319849 A
- CN 200710064453
- CN 200710122085

**Non-patent literature cited in the description**

- *Nuclear Science and Engineering,* 2001, vol. 137, 206-214
- *Nuclear and Radiochemistry,* 2001, vol. 23, 108-113
- *Separation and Purification Technology,* 1999, vol. 16, 147-158